(19) Europäisches Patentamt
European Patent Office
Office européen des brevets

(11) **EP 3 849 324 B1**

(12) **EUROPEAN PATENT SPECIFICATION**

(45) Date of publication and mention
of the grant of the patent:
**05.11.2025 Bulletin 2025/45**

(21) Application number: **19765693.7**

(22) Date of filing: **05.09.2019**

(51) International Patent Classification (IPC):
*A21D 2/38* (2006.01)      *A21D 13/06* (2017.01)
*A21D 13/80* (2017.01)      *A21D 2/18* (2006.01)
*A21D 13/04* (2017.01)

(52) Cooperative Patent Classification (CPC):
**A21D 2/186; A21D 13/04; A21D 13/06**

(86) International application number:
**PCT/EP2019/073718**

(87) International publication number:
**WO 2020/053066 (19.03.2020 Gazette 2020/12)**

(54) **DOUGH COMPRISING NATIVE BUCKWHEAT STARCH**

TEIG ENTHALTEND NATIVE BUCHWEIZENSTÄRKE

PÂTE COMPRENANT DE L'AMIDON NATIF DE SARRASIN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.09.2018 CN 201811056719**

(43) Date of publication of application:
**21.07.2021 Bulletin 2021/29**

(73) Proprietor: **ROQUETTE FRERES**
**62136 Lestrem (FR)**

(72) Inventors:
• **PORA, Bernard**
**SHANGHAI (CN)**
• **TAO, Jingling**
**SHANGHAI (CN)**
• **HASJIM, Jovin**
**SHANGHAI (CN)**

(74) Representative: **Plasseraud IP**
**104 Rue de Richelieu**
**CS92104**
**75080 Paris Cedex 02 (FR)**

(56) References cited:
WO-A1-2015/051228      WO-A1-2015/051236
WO-A1-2018/210741      CN-A- 103 168 812
CN-A- 106 417 511

• **KIYOKAZU IKEDA ET AL: "Endogenous Factors
Responsible for the Textural Characteristics of
Buckwheat Products.", JOURNAL OF
NUTRITIONAL SCIENCE AND VITAMINOLOGY.,
vol. 43, no. 1, 1 January 1997 (1997-01-01), JP,
pages 101 - 111, XP055629609, ISSN: 0301-4800,
DOI: 10.3177/jnsv.43.101**
• **LORENZ K ET AL: "Buckwheat (Fagopyrum
esculentum) Starch - Physico-chemical
Properties and Functional Characteristics",
STARCH: INTERNATIONAL JOURNAL FOR THE
INVESTIGATION, PROCESSING AND USE OF
CARBOHYDRATES AND THEIR DERIVATIVES,
WILEY-VCH VERLAG, WEINHEIM, DE, no. 7,
January 1982 (1982-01-01), pages 217 - 220,
XP009516511, ISSN: 0038-9056, DOI: 10.1002/
STAR.19820340702**
• **ANONYMOUS: "Batter (cooking) - Wikipedia",
WIKIPEDIA, 26 August 2018 (2018-08-26), pages
1 - 3, XP055629984, Retrieved from the Internet
<URL:https://en.wikipedia.org/w/index.php?
title=Batter_(cooking)&oldid=856666426>
[retrieved on 20191008]**

## Description

### Field of the invention

The present disclosure relates to a cereal product dough comprising native buckwheat starch, the use thereof and to a process of fabricating a cereal product.

### Background

In the food industry, starch is a very important ingredient. It is used, amongst other things, as a texturing agent, gelling agent, thickener and stabilizer.

Over the last ten years, consumers have become increasingly reluctant to purchase products with a list of chemical substances on the label or chemically modified ingredients. For that reason, food manufacturers are taking up the challenge to deliver "clean label" food products, i.e. non-chemically modified products. Consumers are also looking for slowly digestible carbohydrates which are healthier than rapidly digestible and absorbable carbohydrates. In particular, it is known that slowly digestible carbohydrates increase the feeling of satiety and provide glucose to the brain over an extended period thereby improving the cognitive functions.

However, current functional clean-label starches, made from waxy based starches, can be in pre-gelatinized form or easily gelatinized during the heating process and thus rapidly digested.

There is thus a need for clean label starches which can be digested more slowly than usual clean labels.

It is known that raw native starch is digested more slowly than gelatinized starch. However, native starch like high-amylose starch, normally used to increase the feeling of satiety, contains mainly resistant starch, not slowly digestible starch. Furthermore, due to its poor functionalities, such as low swelling and low degree of gelatinization, it deteriorates the mouthfeel once incorporated in food products.

Lorenz et al., 1982 and Kiyokazu et al., 1997 are early studies on buckwheat starch and its influence on the quality of food products made with it.

Lorenz et al., 1982 investigates the physico-chemical properties and functional characteristics of buckwheat starch samples and evaluates the quality of cakes made with such starch samples.

Kiyokazu et al., 1997 reports the influence of endogenous factors such as protein and starch content in buckwheat flour on the textural characteristics of buckwheat products and describes native buckwheat starch samples and some buckwheat product doughs used in the study.

Both Lorenz et al., 1982 and Kiyokazu et al., 1997 do not disclose the cereal product dough as defined in the present disclosure.

Since the cell wall materials can protect the starch from being rapidly hydrolyzed by digestive enzymes, whole wheat flour, buckwheat flour (including groats and cuts), oat flour, and other cereal flours, which are disclosed in the patent applications WO 2015051228 A1 and WO 2015051236 A1, also known to provide high dietary fiber content, have been used as slow digestible carbohydrates source. However, the mouthfeel of biscuits made from these flours are not pleasant, biscuits normally having a very dense and hard texture. Low-sugar tartary buckwheat biscuits described in CN 106417511 A and CN 103168812 A have also been provided without addressing the afore-mentioned problems. In particular, additional components are required due to the bitter taste of the tartary buckwheat.

There is thus a need for slowly digestible carbohydrates which can be used for the manufacture of food products without deteriorating the mouthfeel of said products. In particular, it is important to find a clean label starch which simultaneously is good for health, is less or not processed, can improve the mouthfeel of biscuits and/or has slow digestion properties. The present inventors have surprisingly found that native buckwheat starch fulfils these criteria. In particular, buckwheat is an ancient grain which is perceived as a healthy ingredient by the consumers.

### Summary of the present disclosure

A first object of the present disclosure is cereal product dough comprising native buckwheat starch.

A second object of the present disclosure is the use of the cereal product dough.

A third object of the present disclosure which does not form part of the present invention relates to the use of native buckwheat starch to replace partially or totally the flour in a cereal product dough. A fourth object of the present disclosure is a process of fabricating a cereal product.

### Detailed description

The present invention is defined by the subject matter of claims 1 to 6.

A first object of the present disclosure is cereal product dough comprising native buckwheat starch.

As used herein the expression "cereal product" refers to, but is not limited to, biscuits, cookies, sandwich cookies, iced cookies, cakes, breads, rolls, pastries, bars or other baked goods.

As used herein the expression "native buckwheat starch" refers to buckwheat starch coming from natural source. It does not result from enzymatic or chemical processing methods. Native buckwheat starch is recovered from buckwheat grain (*Fagopyrum esculentum*) by extraction processes. Buckwheat starch can be extracted directly from buckwheat groat or from buckwheat flour having high starch content (50-70% of starch in groat and flour).

The native buckwheat starch useful for the present invention is recovered from native sources. It can be extracted from buckwheat groat or from buckwheat flour. An example of a first extraction process comprises the following steps:

1) preparing, at a temperature equal to or below 50°C, an aqueous suspension from the buckwheat flour (dry grinding) or from the buckwheat groat (wet grinding);

2) separating the fiber fraction from the starch and protein fraction by the difference in particle sizes at a temperature comprised between room temperature and 50°C, preferably by filtration, by using sieves;

3) fractionating the aqueous suspension by density at pH between 7 and 9 so as to obtain a light fraction comprising proteins, soluble carbohydrates and salts, and a heavy fraction comprising starch, preferably by using a horizontal screw decanter, a centrifugal decanter or a hydrocyclone;

4) adding water to the heavy fraction at a temperature comprised between room temperature and 50°C, so as to resuspend the heavy fraction;

5) treating the starch fraction at pH between 7 and 9 and at a temperature comprised between room temperature and 50°C at least one time, so as to remove remaining proteins, preferably using a horizontal screw decanter, a centrifugal decanter or a hydrocyclone, more preferably hydrocylone;

6) neutralizing the pH of starch fraction to 5-7.

7) drying the starch fraction, preferably by using fluidized bed dryer or hot air dryer;

8) recovering the dried starch.

Another example of a second extraction process comprises the following steps:

1) preparing, at a temperature equal to or below 50°C, an aqueous suspension from the buckwheat flour (dry grinding) or from the buckwheat groat (wet grinding) with a pH between 7 and 9;

2) fractionating the aqueous suspension by density so as to obtain a light fraction comprising proteins, soluble carbohydrates and salts, and a heavy fraction comprising starch and fibers, preferably by using a horizontal screw decanter, a centrifugal decanter or a hydrocyclone;

3) adding water to the heavy fraction at a temperature comprised between room temperature and 50°C, so as to resuspend the heavy fraction;

4) separating the fiber fraction from the starch fraction by the difference in particle sizes at a temperature comprised between room temperature and 50°C, preferably by filtration, by using sieves;

5) treating the starch fraction at pH between 7 and 9 and at a temperature comprised between room temperature and 50°C at least one time, so as to remove remaining proteins, preferably using a horizontal screw decanter, a centrifugal decanter or a hydrocyclone, more preferably hydrocylone;

6) neutralizing the pH of starch fraction to 5-7.

7) drying the starch fraction, preferably by using fluidized bed dryer or hot air dryer;

8) recovering the dried starch.

Advantageously, the extraction process is free of organic solvents and free of chemical reactants. There is no chemical transformation. Thus, the products incorporating native buckwheat starch obtained from the extraction process are clean label products.

The native buckwheat starch useful for the present disclosure is not gelatinized but is under granular form.

In a preferred embodiment (not according to the present invention), the native buckwheat starch represents from 5% to 60%, preferably from 10% to 40%, more preferably from 12% to 35%, in particular 15% to 32%, or more preferably from 15% to 25% by weight with respect to the total weight of the cereal product dough.

The cereal product dough optionally further comprises sugars such as (glucose) syrups, sugar alcohols, fat such as oil and butter, and/or flour. The sugars and/or sugar alcohols represent from 0% to 40%, preferably from 10% to 25% and even more preferably from 12% to 20% by weight with respect to the total weight of the cereal product dough, the fat represents from 5% to 25%, preferably from 8% to 20% and even more preferably from 10% to 15% by weight with respect to the total weight of the cereal product dough, and the flour represents from 0% to 40%, preferably from 5% to 35%, more preferably from 10% to 25% and even more preferably from 15% to 20% by weight with respect to the total weight of the cereal product dough.

The flour can be from cereal origin, such as (whole) wheat flour, and other origins, such as buckwheat flour and any legume flour.

The native buckwheat starch replaces totally or at least partially the flour. In a preferred embodiment, the native buckwheat starch replaces at least partially the flour. In another preferred embodiment, the native buckwheat starch replaces the flour up to 50% by weight, preferably up to 35% by weight, and more preferably up to 20% by weight with respect to the total weight of the cereal product dough.

In another preferred embodiment, the native buckwheat starch replaces the flour up to 50% by flour weight, preferably up to 55% by flour weight, and more preferably up to 60% by flour weight.

The cereal product dough further optionally comprises whole grains such as oat, nuts, protein such as milk protein, pea protein and wheat protein, milk or milk powder and/or egg. The whole grains and/or nuts represent from 0% to 30%, preferably from 8% to 20% and even more preferably from 10% to 15% by weight with respect to the total weight of the cereal product dough, the protein represents from 0% to 30%, preferably from 1% to 25%, in particular 1.5% to 15%, more preferably from 2% to 15% or more preferably from 5% to 8% by weight with respect to the total weight of the cereal product dough, the milk represents from 0% to 45%, preferably from 10% to 35% and even more preferably from 20% to 25% by weight with respect to the total weight of the cereal product dough, the milk powder represents from 0% to 15%, preferably from 1% to 10% and even more preferably from 2% to 8% by weight with respect to the total weight of the cereal product dough, and the egg represents from 0% to 30%, preferably from 5% to 25% and even more preferably from 10% to 20% by weight with respect to the total weight of the cereal product dough.

The cereal product optionally comprises additives. Preferably, the additives are selected from baking powder, salt, phospholipids such as lecithin, and flavors such as milk flavor, and mixtures thereof. The additives represents from 0% to 10%, preferably from 0.1% to 5%, more preferably from 0.5% to 2.5% or more preferably from 0.5% to 2% by weight with respect to the total weight of the cereal product dough.

In a preferred embodiment (not according to the present invention), the cereal product dough comprises:

- from 5% to 60%, preferably from 10% to 40%, more preferably from 12% to 35%, in particular 15% to 32%, or more preferably from 15% to 25% by weight of native buckwheat starch with respect to the total weight of the cereal product dough,
- from 0% to 40%, preferably from 10% to 25% and even more preferably from 12% to 20% by weight of sugars and/or sugar alcohols with respect to the total weight of the cereal product dough,
- from 5% to 25%, preferably from 8% to 20% and even more preferably from 10% to 15% by weight of fat with respect to the total weight of the cereal product dough,
- from 0% to 40%, preferably from 5% to 35%, more preferably from 10% to 25% and even more preferably from 15% to 20% by weight of flour with respect to the total weight of the cereal product dough,
- from 0% to 30%, preferably from 8% to 20% and even more preferably from 10% to 15% by weight of whole grains and/or nuts with respect to the total weight of the cereal product dough,
- from 0% to 30%, preferably from 1% to 25%, in particular 1.5% to 15%, more preferably from 2% to 15% or more preferably from 5% to 8% by weight of protein with respect to the total weight of the cereal product dough,
- from 0% to 45%, preferably from 10% to 35% and even more preferably from 20% to 25% by weight of milk with respect to the total weight of the cereal product dough,
- from 0% to 15%, preferably from 1% to 10% and even more preferably from 2% to 8% by weight of milk powder with respect to the total weight of the cereal product dough,
- from 0% to 30%, preferably from 5% to 25% and even more preferably from 10% to 20% by weight of egg with respect to the total weight of the cereal product dough, and
- from 0% to 10%, preferably from 0.1% to 5%, more preferably from 0.5% to 2.5% or more preferably from 0.5% to 2% by weight of additives with respect to the total weight of the cereal product dough.

Another object of the present disclosure is the use of the cereal product dough for the preparation of a cereal product.

In a preferred embodiment, the native buckwheat starch improves the mouthfeel of the cereal product and/or slows the digestive rate of the cereal product and/or provides a cereal product with a high dietary fiber content and/or improves the feeling of satiety.

In particular, the native buckwheat starch is a clean label starch having higher pasting temperature than most commercial native starches. Thus, it is not completely swollen during heating and it will retain some of the slow digestion properties after being heated in a low moisture system such as cereal product. Such cereal product may therefore be used to prolong the feeling of satiety, such as meal replacement or meal to go. Furthermore, since it is partially swollen and/or gelatinized, it does not deteriorate and even can improve the mouthfeel of the cereal product.

Another object of the present disclosure which does not form part of the present invention relates to the use of native buckwheat starch to replace partially or totally the flour in a cereal product dough.

The use of native buckwheat starch to replace at least partially the flour in the cereal product dough provides products with appearance, texture (such as hardness and brittleness), mouthfeel, moisture content and water activity similar and even improved in comparison to products without native buckwheat starch. Simultaneously, the use of native buckwheat starch to replace at least partially the flour in the cereal product dough provides products with lowered digestibility in comparison to products without native buckwheat starch.

The terms "hardness", "firmness" and "softness" refer to textural properties related to the resistance to deformation. A soft product has low resistance to deformation, while a firm or hard product has high resistance to deformation. These properties can be measured, for example, by a texture analyzer. For example, hardness can be determined as the maximum force that can be withstood by a material before it deforms.

The term "brittleness" is related to the tendency of a cereal product to fracture, crumble, crack, shatter or fail when a relatively small amount of force or impact is applied on it. A brittle product usually has high degree of hardness and low degree of cohesiveness. The term "brittleness" encompasses fracturability, crispiness, crunchiness and crumbliness.

Another object of the present disclosure relates to a process of fabricating a cereal product comprising the steps of:

a) blending native buckwheat starch and other dry ingredients, such as optionally sugar and flour to form a uniform dry mixture,
b) adding fat and other wet ingredients to the uniform dry mixture and stirring to form the cereal product dough of the present disclosure, and
c) baking the cereal product dough.

In a preferred embodiment, step b) is performed before step a). In this case, the process of fabricating a cereal product comprises the steps of:

a) blending fat and other wet ingredients to form a uniform mixture,
b) adding native buckwheat starch and other dry ingredients, such as optionally sugar and flour to the uniform mixture and stirring to form the cereal product dough of the present disclosure, and
c) baking the cereal product dough.

In a preferred embodiment, the process of fabricating a cereal product comprises the steps of:

a) blending sugar, fat and other wet ingredients to form a uniform mixture,
b) adding native buckwheat starch and other dry ingredients, such as optionally flour to the uniform mixture and stirring to form the cereal product dough of the present disclosure, and
c) baking the cereal product dough.

In a preferred embodiment, the step c) is performed at a temperature ranging from 150°C to 250°C, preferably at a temperature ranging from 160°C to 210°C and more preferably at a temperature ranging from 160°C to 190°C.

In a preferred embodiment, the step c) is performed during a time comprised between 5 and 45 minutes, preferably between 8 and 20 minutes, more preferably between 10 and 13, or more preferably 10 and 12 minutes.

The disclosure will now be illustrated by means of the following figures and examples, it being understood that these are intended to explain the disclosure, and in no way to limit its scope.

**Brief description of the drawings:**

Figure 1 shows the digestibility parameters of biscuits of Example 1, which were made from native buckwheat starch according to the present disclosure in comparison to biscuits made from wheat flour (control), wheat starch or buckwheat flour.

Figure 2 shows the appearance of biscuits of Example 2 made from native buckwheat starch according to the present disclosure in comparison to biscuits made from cake flour, whole wheat flour or wheat starch.

Figure 3 shows the digestibility parameters of biscuits of Example 2 made from native buckwheat starch according to the present disclosure in comparison to biscuits made from cake flour, whole wheat flour or wheat starch.

**EXAMPLES**

### Example 1:

Not according to the present invention, it is disclosed an example which describes the preparation of biscuits samples containing a wheat flour (control), a native buckwheat starch, a wheat starch or a buckwheat flour.

Buckwheat starch was extracted from buckwheat groats in a potato starch plant, typically similar to the first extraction process as described on page 3.

Wheat flour, wheat starch or buckwheat flour were purchased from a local grocery store in China.

Nutralys® is a concentrated and highly digestive wheat protein sold by Roquette.

Other ingredients were purchased from a local store in China.

The ingredients for biscuits making in percentage by weight were as follows:

Table 12

| Ingredients | Wheat flour (Control) | Native Buck wheat starch formula | Wheat starch formula (Comparative) | Buckwheat flour formula (Comparative) |
|---|---|---|---|---|
| Wheat flour | 32% | 16% | 16% | - |
| Native Buckwheat starch | - | 16% | - | - |
| Wheat starch | - | - | 16% | - |
| Buckwheat flour | - | - | - | 32% |
| Sugar | 13.5% | 13.5% | 13.5% | 13.5% |
| Rolled oat powder | 11.8% | 11.8% | 11.8% | 11.8% |
| Vegetable oil | 11% | 11% | 11% | 11% |
| Nutralys® wheat protein | 6.6% | 6.6% | 6.6% | 6.6% |
| Glucose syrup | 3% | 3% | 3% | 3% |
| Lecithin | 0.3% | 0.3% | 0.3% | 0.3% |
| Baking powder | 0.3% | 0.3% | 0.3% | 0.3% |
| Salt | 0.2% | 0.2% | 0.2% | 0.2% |
| Milk | 21% | 21% | 21% | 21% |
| Milk flavor | 0.3% | 0.3% | 0.3% | 0.3% |
| Total | 100% | 100% | 100% | 100% |

The process followed for obtaining biscuits is as follows:

i. Blending homogeneously all dry ingredients to form a uniform dry mixture;
ii. Adding milk, milk flavor, lecithin, glucose syrup, and vegetable oil to the dry mixture and stirring to form a uniform dough;
iii. Rolling the dough to 3 mm thickness and creating shapes, such as circle, using cookie cutters;
iv. Baking the cut doughs in an oven with top temperature at 190°C and bottom temperature at 160°C for 10 min;
v. Allowing biscuits to cool to room temperature and sealing them in a plastic or aluminum packages.

On the second day after the biscuits were produced, the texture of biscuits was measured using a texture analyzer TA-XT plus (Stable Micro Systems) by using the three point bending test (HDP/3PB).The measurements parameters are listed in table 13 below:

Table 13

| Mode | Compress |
|---|---|
| Probe | HDP/3PB |
| Pre-Test Speed | 1mm/sec |

(continued)

| Mode | Compress |
|---|---|
| Test Speed | 2mm/sec |
| Post-Test Speed | 10mm/sec |
| Distance | 10 mm |
| Trigger Force | Auto 5g |
| Data Acquisition Rate | 500pps |

The digestibility test was performed according to the following protocol.

1) Weighing accurately 50 mg of each biscuit in a 15 mL centrifuge tube
2) Adding 2 mL deionized water into the tube and mixing
3) Adding 8.0 mL enzyme solution containing 0.33 mg pancreatin and 16.7 µL amyloglucosidase in acetate buffer (pH 6.0 containing 200 mM calcium chloride, 0.49 mM magnesium chloride and 0.02 % sodium azide) into the tube and incubating it in a shaking water bath at 37°C and the shaking speed of 300 rpm
4) After the time periods of 0, 5, 10, 15, 20, 30, 45, 60, 90, 120, 180, 240 and 300 min, shaking the tube and quickly taking 0.1 mL aliquot and transferring it to a 1.5 mL microcentrifuge tube containing 0.9 mL absolute ethanol, and returning the tube for further time course digestion
5) Determining the glucose content using glucose oxidase-peroxidase (GOPOD) method (Megazyme assay kit) The digestibility (%) is calculated according to Equation 1

$$\frac{\frac{\Delta A - b}{k} \times f \times V}{W \times D} \times \frac{162}{180} \times 100\% \qquad \text{(Equation 1)}$$

where:

$\Delta A$ = Absorbance (reaction) read against the reagent blank.
b = Intercept of the linear fitting equation for standard curve
k = Slope of the linear fitting equation for standard curve
f = Diluting factor (0.1 mL taken from 1 mL)
V = Total volume of sample solution (2 mL deionized water + 8 mL enzyme solution)
W = The weight in milligrams of the starch powder sample analyzed
D = Dry matter content of the sample analyzed

$\frac{162}{180} = \text{Adjustment}$ from free D-glucose to anhydro D-glucose (as occurs in starch).

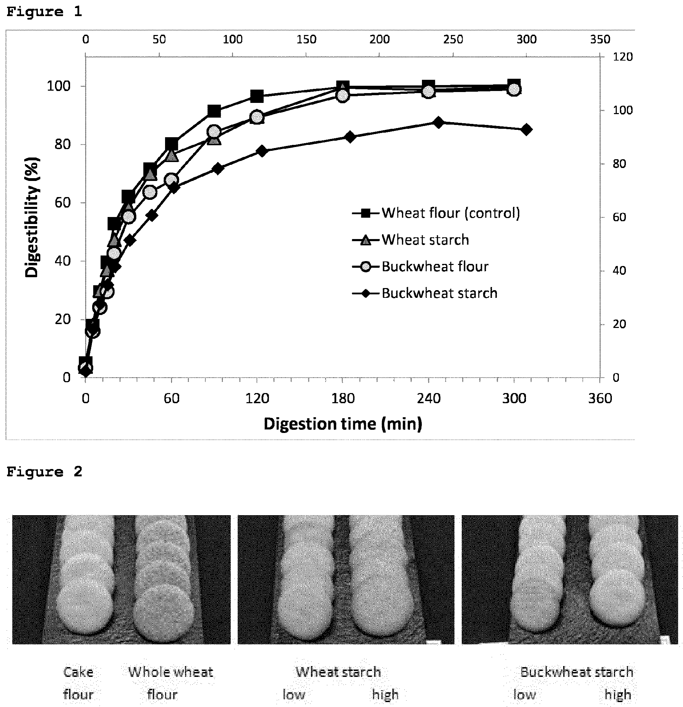

The starch content in the biscuits was determined using Megazyme Total Starch Assay Kit (AA/AMG).
The digestibility parameters, including the calculation of digestion rate (k) and the total digestibility, were measured following the methods of Gong et al. (Food Hydrocolloids, 2019, 96:634-643).
Results are shown on Figure 1.
The moisture content was measured using a moisture analyzer (MA45C, Sartorius) set at 105°C.
The water activity ($a_w$) was measured using an $a_w$ meter (HygroLab2, Rotronic).
The results are summed up in the following table:

Table 14

| Index | Wheat flour (Control) | Native Buck wheat starch formula | Wheat starch formula (Comparative) | Buckwheat flour formula (Comparative) |
|---|---|---|---|---|
| **Texture** | | | | |
| Brittleness (mm) | 0.44 | 0.39 | 0.47 | 0.40 |
| Hardness (g) | 867.9 | 550.3 | 450.2 | 654.0 |

(continued)

| Starch digestibility | | | | |
|---|---|---|---|---|
| Rate of starch digestion, $k$ (1/min) | 0.0300 | 0.0267 | 0.0284 | 0.0233 |
| Total starch digestibility (%) | 99.0 | 90.8 | 96.4 | 97.1 |
| **Observation** | | | | |
| Thickness | 6.85 | 6.30 | 6.72 | 4.44 |
| Moisture (%) | 1.58 | 1.01 | 1.26 | 0.69 |
| Water activity ($a_w$) | 0.247 | 0.091 | 0.196 | 0.217 |

The biscuits made with native buckwheat starch presented a better texture and appearance, lower total starch digestibility, and lower water activity than the control biscuits made with wheat flour and biscuits made with buckwheat flour. In addition, the biscuits made with native buckwheat starch had lower digestibility rate than those made with wheat flour (control). Although the biscuits made with wheat starch were similar texture and appearance to those made with native buckwheat starch, biscuits made with wheat starch had higher digestion rate, total digestibility, and water activity than those made with native buckwheat starch.

## Example 2:

This example describes the properties of biscuits made from buckwheat starch in comparison to biscuits made from cake flour, whole wheat flour and wheat starch. Only the biscuit dough and process relating to the "Buckwheat starch High" composition of table 15 are according to the present invention. All remaining biscuit doughs and corresponding processes are not according to the present invention.

Buckwheat starch was extracted from buckwheat groats in a potato starch plant, typically similar to the first extraction process as described on page 3.

Cake (wheat) flour, whole wheat flour, wheat starch and wheat gluten were purchased from a local grocery store in China.

Other ingredients were also purchased from a local grocery store in China.

Pancreatin and amyloglucosidase used in the digestibility test were purchased from Sigma-Aldrich and Megazyme, respectively.

The ingredients for biscuits making in percentage by weight were as follows:

Table 15

| Ingredient (%) | Cake flour | Whole wheat flour | Wheat starch Low | Wheat starch High | Buckwheat starch Low | Buckwheat starch High |
|---|---|---|---|---|---|---|
| Cake flour | 50.1% | - | 33.7% | 17.4% | 33.6% | 17.2% |
| Whole wheat flour | - | 50.1% | - | - | - | - |
| Wheat starch | - | - | 14.4% | 28.8% | - | - |
| Wheat gluten | - | - | 1.6% | 3.3% | 1.2% | 2.4% |
| Buckwheat starch | - | - | - | - | 15.1% | 30.2% |
| Egg | 15.8% | 15.8% | 16.0% | 16.0% | 15.9% | 15.9% |
| Sugar | 15.8% | 15.8% | 16.0% | 16.0% | 15.9% | 15.9% |
| Salt | 0.8% | 0.8% | 0.8% | 0.8% | 0.8% | 0.8% |
| Butter | 2.7% | 2.7% | 2.7% | 2.7% | 2.7% | 2.7% |
| Milk Powder | 2.6% | 2.6% | 2.6% | 2.7% | 2.6% | 2.7% |
| Baking Powder | 1.6% | 1.6% | 1.6% | 1.6% | 1.6% | 1.6% |
| Vegetable oil | 10.6% | 10.6% | 10.6% | 10.7% | 10.6% | 10.6% |
| Total | 100% | 100% | 100% | 100% | 100% | 100% |

The process followed for making biscuits is as follows:

1. Blending sugar, salt and egg for 10s,

2. Adding butter and mixing for 20s,

3. Adding vegetable oil and mixing for 40s,

4. Adding the flour, starch, wheat gluten, baking powder and milk powder to the mixture and blending until the dough is uniform,

5. Freezing the dough at -18 °C for one hour,

6. Rolling the dough to 5mm thickness and cutting into shapes,

7. Baking in an oven with top temperature at 190°C and bottom temperature at 180°C for 11-13 min.

The appearance, texture (hardness and brittleness) and digestibility have been studied for each biscuit according to the following protocols.

*Appearance:*

The appearance of biscuits was evaluated using naked eyes based on their color and surface appearance.
The results are shown on figure 2. The biscuit samples made with buckwheat starch generally had lighter color than the controls made with cake flour, whole wheat flour, and wheat starch. The biscuits made with whole wheat flour had the darkest color and very coarse texture, whereas other biscuits had very smooth surface appearance.

*Texture:*

Biscuit samples were analyzed using a texture analyzer TA-XT plus (Stable Micro Systems) after 30- and 60-day storage.
The specific parameters and settings are as follows:

- Detector number: HDP/3PB
- Pre-test speed: 1 mm/s
- Test speed: 1 mm/s
- Post-test speed: 10 mm/s
- Distance: 7 mm
- Trigger force (auto): 0.5 g

Hardness refers to the maximum force (g) that the texture analyzer detects before the biscuit is cracked.
Brittleness (mm) refers to the distance the probe moves downward before the biscuit is cracked. The more brittle the biscuit is, the shorter the distance the probe can move.
Results are summarized in table 16.

Table 16

| Biscuit Name | 30 Days | | 60 Days | |
|---|---|---|---|---|
| | Brittleness (Distance to Break, mm) | Hardness (g) | Brittleness (Distance to Break, mm) | Hardness (g) |
| Cake flour | 0.730 ± 0.105 | 1,605.8 ± 393.4 | 1.003 ± 0.157 | 1,656.9 ± 304.0 |
| Whole wheat flour | 0.821 ± 0.142 | 1,212.7 ± 172.4 | 0.989 ± 0.243 | 1,237.1 ± 111.7 |
| Wheat starch, low | 0.655 ± 0.039 | 1,014.9 ± 171.4 | 0.736 ± 0.088 | 1,045.5 ± 116.9 |
| Wheat starch, high | 0.864 ± 0.200 | 518.1 ± 140.0 | 0.569 | 583.1 |
| Buckwheat starch, low | 0.625 ± 0.045 | 1,017.5 ± 46.6 | 0.688 ± 0.127 | 954.6 ± 78.0 |

(continued)

| Biscuit Name | 30 Days | | 60 Days | |
|---|---|---|---|---|
| | Brittleness (Distance to Break, mm) | Hardness (g) | Brittleness (Distance to Break, mm) | Hardness (g) |
| Buckwheat starch, high | 0.735 ± 0.218 | 721.2 ± 283.8 | 0.461 | 579.7 |

As shown in table 16, the biscuit samples made using wheat starch and buckwheat starch had lower hardness after 30- and 60-day storage and higher brittleness (as shorter distance to break) after 60-day storage. The low hardness and increased brittleness can be good for children, elderly people, and patients with chewing problems. The decrease in hardness after 30- and 60-day storage and the increase in brittleness after 60-day storage were more obvious at high starch content in the recipe. The firmness did not significantly change with the storage time, whereas the brittleness decreased (distance to break increased) for the controls made with cake flour and whole wheat flour, but increased (distance to break decreased) for those made with high level of wheat starch and buckwheat starch. The texture properties of the biscuit samples made with wheat starch and buckwheat starch were similar at the same level of starch addition.

*Digestibility:*

The digestibility test was performed according to the following protocol.

1) Weighing accurately 50 mg of each biscuit in a 15 mL centrifuge tube
2) Adding 2 mL deionized water into the tube and mixing
3) Adding 8.0 mL enzyme solution containing 0.33 mg pancreatin and 16.7 μL amyloglucosidase in acetate buffer (pH 6.0 containing 200 mM calcium chloride, 0.49 mM magnesium chloride and 0.02 % sodium azide) into the tube and incubating it in a shaking water bath at 37°C and the shaking speed of 300 rpm
4) After the time periods of 0, 5, 10, 15, 20, 30, 45, 60, 90, 120, 180, 240 and 300 min, shaking the tube and quickly taking 0.1 mL aliquot and transferring it to a 1.5 mL microcentrifuge tube containing 0.9 mL absolute ethanol, and returning the tube for further time course digestion
5) Determining the glucose content using glucose oxidase-peroxidase (GOPOD) method (Megazyme assay kit)
The digestibility (%) is calculated according to Equation 1

$$\frac{\frac{\Delta A - b}{k} \times f \times V}{W \times D} \times \frac{162}{180} \times 100\% \qquad \text{(Equation 1)}$$

where:

ΔA=Absorbance (reaction) read against the reagent blank.
b = Intercept of the linear fitting equation for standard curve
k = Slope of the linear fitting equation for standard curve
f = Diluting factor (0.1 mL taken from 1 mL)
V = Total volume of sample solution (2 mL deionized water + 8 mL enzyme solution)
W = The weight in milligrams of the starch powder sample analyzed
D = Dry matter content of the sample analyzed

$\frac{162}{180}$ = Adjustment from free D-glucose to anhydro D-glucose (as occurs in starch).

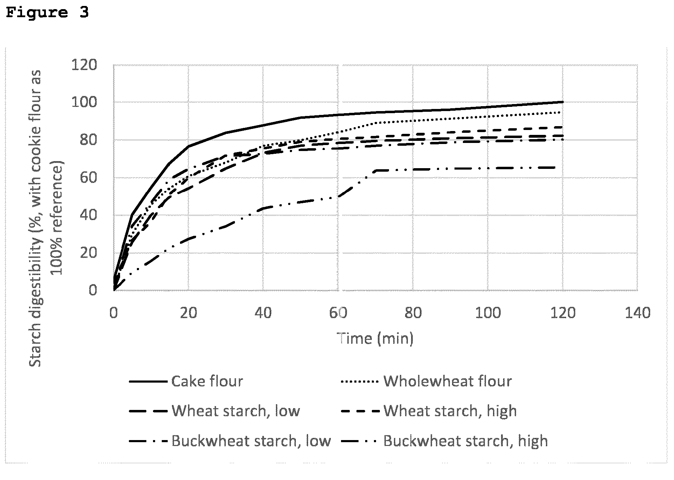

In the same manner as in example 1, the digestibility parameters, including the calculation of digestion rate (k) and the total digestibility, were measured following the methods of Gong et al. (Food Hydrocolloids, 2019, 96:634-643).
The maximum digestibility point of biscuits made with cake flour was set as 100% for easy comparison with other biscuit samples.
Results are shown on Figure 3 and in table 17 which summarizes the digestibility properties.

Table 17

| | Rate of starch digestion, *k* (1/min) | Total starch digestibility (%) |
|---|---|---|
| Cake flour | 0.081 | 94.6 |

(continued)

| | Rate of starch digestion, $k$ (1/min) | Total starch digestibility (%) |
|---|---|---|
| Whole wheat flour | 0.060 | 88.5 |
| Wheat starch, low | 0.062 | 80.3 |
| Wheat starch, high | 0.058 | 84.2 |
| Buckwheat starch, low | 0.098 | 76.5 |
| Buckwheat starch, high | 0.023 | 71.7 |

As shown on figure 3 and in table 17, both biscuit samples made from buckwheat starch had the lowest total digestibility compared with the controls made with cake flour, whole wheat flour and wheat starch. Furthermore, the biscuit made with 30% buckwheat starch (high buckwheat starch biscuit) had the lowest digestion rate ($k$), which was approximately 28% and 38% of the digestion rate of the controls made with cake flour and whole wheat flour, respectively.

Conclusion:

The biscuits made with native buckwheat starch presented a better texture and appearance and lower total digestibility than the control biscuits made from cake flour and whole wheat flour. The low hardness and increased brittleness can be good for children, elderly people, and patients with chewing problems. In addition, the biscuits made with high content of native buckwheat starch had lower total digestibility rate than the controls. Although the biscuits made with wheat starch had quite similar texture and appearance than those made with native buckwheat starch, biscuits made with wheat starch had higher digestion rate, total digestibility, than those made with native buckwheat starch at equivalent starch content.

**Claims**

1. Cereal product dough comprising from 25% to 35% by weight with respect to the total weight of the cereal product dough of native buckwheat starch

   said native buckwheat starch being not gelatinized but under granular form and resulting from an extraction process comprising the following steps:

   a. preparing, at a temperature equal to or below 50°C, an aqueous suspension from the buckwheat flour (dry grinding) or from the buckwheat groat (wet grinding);
   b. separating the fiber fraction from the starch and protein fraction by the difference in particle sizes at a temperature comprised between room temperature and 50°C, preferably by filtration, by using sieves;
   c. fractionating the aqueous suspension by density at pH between 7 and 9 so as to obtain a light fraction comprising proteins, soluble carbohydrates and salts, and a heavy fraction comprising starch, preferably by using a horizontal screw decanter, a centrifugal decanter or a hydrocyclone;
   d. adding water to the heavy fraction at a temperature comprised between room temperature and 50°C, so as to resuspend the heavy fraction;
   e. treating the starch fraction at pH between 7 and 9 and at a temperature comprised between room temperature and 50°C at least one time, so as to remove remaining proteins, preferably using a horizontal screw decanter, a centrifugal decanter or a hydrocyclone, more preferably hydrocylone;
   f. neutralizing the pH of starch fraction to 5-7.
   g. drying the starch fraction, preferably by using fluidized bed dryer or hot air dryer;
   h. recovering the dried starch,

   wherein said cereal product dough also comprises sugars, sugar alcohols, fat and/or flour, the sugars and/or sugar alcohols representing from 0% to 40% by weight with respect to the total weight of the cereal product dough, the fat representing from 5% to 25% by weight with respect to the total weight of the cereal product dough, and/or the flour representing from 0% to 40% by weight with respect to the total weight of the cereal product dough.

2. Use of the cereal product dough according to claim 1 for the preparation of a cereal product.

**3.** Use of the cereal product dough according to claim 2, wherein the cereal product is a biscuit.

**4.** Process of fabricating a cereal product comprising the steps of:

a) blending native buckwheat starch and other dry ingredients, such as optionally sugar and flour to form a uniform dry mixture,
b) adding fat and other wet ingredients to the uniform dry mixture and stirring to form the cereal product dough as claimed in claim 1, and
c) baking the cereal product dough.

**5.** Process of fabricating a cereal product comprising the steps of:

a) blending sugar, fat and other wet ingredients to form a uniform mixture,
b) adding native buckwheat starch and other dry ingredients, such as optionally flour to the uniform mixture and stirring to form the cereal product dough as claimed in claim 1, and
c) baking the cereal product dough.

**6.** Process of fabricating a cereal product comprising the steps of:

a) blending fat and other wet ingredients to form a uniform mixture,
b) adding native buckwheat starch and other dry ingredients, such as optionally sugar and flour to the uniform mixture and stirring to form the cereal product dough as claimed in claim 1, and
c) baking the cereal product dough.

**Patentansprüche**

**1.** Getreideproduktteig, der 25 bis 35 Gew.-%, bezogen auf das Gesamtgewicht des Getreideproduktteigs, an nativer Buchweizenstärke umfasst,

wobei die native Buchweizenstärke nicht gelatiniert ist, sondern in körniger Form vorliegt und aus einem Extraktionsverfahren stammt, das die folgenden Schritte umfasst:

a. Herstellen einer wässrigen Suspension aus dem Buchweizenmehl (Trockenvermahlung) oder aus der Buchweizengrütze (Nassvermahlung) bei einer Temperatur von 50°C oder darunter;
b. Abtrennen der Faserfraktion von der Stärke- und Proteinfraktion durch den Unterschied der Teilchengrößen bei einer Temperatur zwischen Raumtemperatur und 50°C, vorzugsweise durch Filtration, unter Verwendung von Sieben;
c. Fraktionieren der wässrigen Suspension nach Dichte bei einem pH-Wert zwischen 7 und 9, um eine leichte Fraktion, die Proteine, lösliche Kohlenhydrate und Salze umfasst, und eine schwere Fraktion, die Stärke umfasst, zu erhalten, vorzugsweise unter Verwendung eines horizontalen Schneckendekanters, eines Zentrifugaldekanters oder eines Hydrozyklons;
d. Zugeben von Wasser zu der schweren Fraktion bei einer Temperatur zwischen Raumtemperatur und 50°C, um die schwere Fraktion zu resuspendieren;
e. mindestens einmaliges Behandeln der Stärkefraktion bei einem pH-Wert zwischen 7 und 9 und einer Temperatur zwischen Raumtemperatur und 50°C, um restliche Proteine zu entfernen, vorzugsweise unter Verwendung eines horizontalen Schneckendekanters, eines Zentrifugaldekanters oder eines Hydrozyklons, besonders bevorzugt eines Hydrozyklons;
f. Neutralisieren des pH-Werts der Stärkefraktion auf 5-7;
g. Trocknen der Stärkefraktion, vorzugsweise unter Verwendung eines Fließbett-Trockners oder Heißlufttrockners;
h. Rückgewinnen der getrockneten Stärke,

wobei der Getreideproduktteig auch Zucker, Zuckeralkohole, Fett und/oder Mehl umfasst, wobei die Zucker und/oder Zuckeralkohole 0 bis 40 Gew.-%, bezogen auf das Gesamtgewicht des Getreideproduktteigs, ausmachen, das Fett 5 bis 25 Gew.-%, bezogen auf das Gesamtgewicht des Getreideproduktteigs, ausmacht und/oder das Mehl 0 bis 40 Gew.-%, bezogen auf das Gesamtgewicht des Getreideproduktteigs ausmacht.

**2.** Verwendung des Getreideproduktteigs nach Anspruch 1 für die Herstellung eines Getreideprodukts.

**3.** Verwendung des Getreideproduktteigs nach Anspruch, 2 wobei das Getreideprodukt ein Keks ist.

**4.** Verfahren zur Herstellung eines Getreideprodukts, das die folgenden Schritte umfasst:

a) Mischen von nativer Buchweizenstärke und anderen trockenen Zutaten, wie z.B. wahlweise Zucker und Mehl, um eine einheitliche Trockenmischung zu bilden,
b) Zugeben von Fett und anderen feuchten Zutaten zu der einheitlichen Trockenmischung und Rühren, um den Getreideproduktteig nach Anspruch 1 zu bilden, und
c) Backen des Getreideproduktteigs.

**5.** Verfahren zur Herstellung eines Getreideprodukts, das die folgenden Schritte umfasst:

a) Mischen von Zucker, Fett und anderen feuchten Zutaten, um eine einheitliche Mischung zu bilden,
b) Zugeben von nativer Buchweizenstärke und anderen trockenen Zutaten, wie z.B. wahlweise Mehl, zu der einheitlichen Mischung und Rühren, um den Getreideproduktteig nach Anspruch 1 zu bilden, und
c) Backen des Getreideproduktteigs.

**6.** Verfahren zur Herstellung eines Getreideprodukts, umfassend die Schritte

a) Mischen von Fett und anderen feuchten Zutaten, um eine einheitliche Mischung zu bilden,
b) Zugeben von nativer Buchweizenstärke und anderen trockenen Zutaten, wie z.B. wahlweise Zucker und Mehl, zu der einheitlichen Mischung und Rühren, um den Getreideproduktteig nach Anspruch 1 zu bilden, und
c) Backen des Getreideproduktteigs.

**Revendications**

**1.** Pâte de produit céréalier comprenant de 25 % à 35 % en poids par rapport au poids total de la pâte de produit céréalier d'amidon de sarrasin natif,

ledit amidon de sarrasin natif n'étant pas gélatinisé mais sous forme granulaire et résultant d'un processus d'extraction comprenant les étapes suivantes :

a. préparer, à une température égale ou inférieure à 50 °C, une suspension aqueuse à partir de farine de sarrasin (broyage à sec) ou à partir de gruau de sarrasin (broyage humide) ;
b. séparer la fraction fibreuse de la fraction d'amidon et de protéine par la différence de taille des particules à une température comprise entre la température ambiante et 50 °C, de préférence par filtration, à l'aide de tamis ;
c. fractionner la suspension aqueuse par densité à un pH compris entre 7 et 9 de manière à obtenir une fraction légère comprenant des protéines, des hydrates de carbone solubles et des sels, et une fraction lourde comprenant de l'amidon, de préférence à l'aide d'un décanteur à vis horizontal, d'un décanteur centrifuge ou d'un hydrocyclone ;
d. ajouter de l'eau à la fraction lourde à une température comprise entre la température ambiante et 50 °C, de manière à resuspendre la fraction lourde ;
e. traiter la fraction d'amidon à un pH compris entre 7 et 9 et à une température comprise entre la température ambiante et 50 °C au moins une fois, afin d'éliminer les protéines restantes, de préférence à l'aide d'un décanteur à vis horizontal, d'un décanteur centrifuge ou d'un hydrocyclone, plus préférentiellement d'un hydrocyclone ;
f. neutraliser le pH de la fraction d'amidon à 5-7.
g. sécher la fraction d'amidon, de préférence à l'aide d'un sécheur à lit fluidisé ou d'un sécheur à air chaud ;
h. récupérer l'amidon séché,

dans laquelle ladite pâte de produit céréalier comprend également des sucres, des alcools de sucre, des matières grasses et/ou de la farine, les sucres et/ou les alcools de sucre représentant de 0 % à 40 % en poids par rapport au poids total de la pâte de produit céréalier, les matières grasses représentant de 5 % à 25 % en poids par rapport au poids total de la pâte de produit céréalier, et/ou la farine représentant de 0 % à 40 % en poids par rapport au poids total de la pâte de produit céréalier.

2. Utilisation de la pâte de produit céréalier selon la revendication 1 pour la préparation d'un produit céréalier.

3. Utilisation de la pâte de produit céréalier selon la revendication 2, dans laquelle le produit céréalier est un biscuit.

4. Procédé de fabrication d'un produit céréalier comprenant les étapes suivantes :

a) mélanger de l'amidon de sarrasin natif et d'autres ingrédients secs, tels que optionnellement du sucre et de la farine pour former un mélange sec uniforme,
b) ajouter des matières grasses et d'autres ingrédients humides au mélange sec uniforme et remuer pour former la pâte de produit céréalier selon la revendication 1, et
c) cuisson de la pâte de produit céréalier.

5. Procédé de fabrication d'un produit céréalier comprenant les étapes suivantes :

a) mélanger du sucre, des matières grasses et d'autres ingrédients humides pour former un mélange uniforme,
b) ajouter de l'amidon de sarrasin natif et d'autres ingrédients secs, tels que optionnellement de la farine au mélange uniforme et remuer pour former la pâte de produit céréalier selon la revendication 1, et
c) cuisson de la pâte de produit céréalier.

6. Procédé de fabrication d'un produit céréalier comprenant les étapes suivantes :

a) mélanger des matières grasses et d'autres ingrédients humides pour former un mélange uniforme,
b) ajouter de l'amidon de sarrasin natif et d'autres ingrédients secs, tels que optionnellement du sucre et de la farine au mélange uniforme et remuer pour former la pâte de produit céréalier selon la revendication 1, et
c) cuisson de la pâte de produit céréalier.

Figure 1

Figure 2

| Cake flour | Whole wheat flour | Wheat starch low | high | Buckwheat starch low | high |

**Figure 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015051228 A1
- WO 2015051236 A1
- CN 106417511 A
- CN 103168812 A

**Non-patent literature cited in the description**

- **GONG et al.** *Food Hydrocolloids*, 2019, vol. 96, 634-643